# EUROPÄISCHE PATENTANMELDUNG

(11) **EP 1 050 512 A2**
(43) Veröffentlichungstag der Anmeldung: **08.11.2000**
(21) Anmeldenummer: 00108159.5
(22) Anmeldetag: 13.04.2000
(51) Int. Cl.: C02F 11/14

(54) **Verfahren zur Behandlung von Schlämmen**

(30) Priorität: 04.05.1999 DE 19920285
(71) Anmelder: FRAUNHOFER-GESELLSCHAFT ZUR FÖRDERUNG DER ANGEWANDTEN FORSCHUNG E.V., 80636 München (DE)
(72) Erfinder: Eisner, Peter, Dr.-Ing., 85354 Freiasing (DE); Menner, Michael, Dr., 82223 Eichenau (DE); Borcherding, Axel, Dipl.-Ing., 80937 München (DE)
(74) Vertreter: Pfenning, Meinig & Partner GbR

(57) **Zusammenfassung**

Die Erfindung betrifft ein Verfahren zur Behandlung von Schlämmen, in denen die Feststoffpartikel in einer stabilen Dispersion vorliegen, wie Läppschlämmen, Honschlämmen oder dergleichen wobei die Feststoffpartikel als feste Phase von der flüssigen Phase getrennt werden, wobei vor der Trennung dem Schlamm amphiphile Hilfsstoffe zugesetzt werden.

## Beschreibung

Die vorliegende Erfindung bezieht sich auf ein Verfahren zur Behandlung von Schlämmen, insbesondere auf ein Verfahren zur Fraktionierung von Schlämmen. Derartige Verfahren werden insbesondere bei der Verwertung von Läppschlämmen, Honschlämmen und dergleichen eingesetzt.

Schlämme, wie beispielsweise Läppschlämme oder Honschlämme sind Dispersionen von Schleifmittelpartikeln und anderen Feststoffpartikeln in einer flüssigen Phase. Diese Schlämme sind stabile Dispersionen der Feststoffpartikel bzw. der weiteren Feststoffpartikel in der flüssigen Phase. Die flüssige Phase besteht aus Öl und Additiven sowie gegebenenfalls Emulgatoren zur Erzeugung einer stabilen Dispersion der Feststoffpartikel. Derartige Schlämme fallen als Abfall zum Beispiel beim Läppen, Honen oder in anderen Oberflächenbearbeitungsprozessen an. Die Feststoffpartikel sedimentieren folglich nicht, weshalb es nicht unmittelbar möglich ist, eine Fest-Flüssig-Trennung z.B. durch Sedimentation oder Zentrifugation durchzuführen. Die Feststoffpartikel lassen sich auch nicht mit Hilfe von Pressen oder Brikettiervorrichtungen von der flüssigen Phase abtrennen.

Derartige Schlämme werden daher gewöhnlich als Sonderabfall verbrannt bzw. thermisch verwertet. Eine stoffliche Verwertung derartiger Schlämme ist bisher aus dem Stand der Technik nicht bekannt. Für ölhaltige Schleifschlämme hingegen, deren Partikel nicht stabil dispergiert sind, existieren einige Lösungsansätze, die vorwiegend auf die Rückgewinnung des Schleiföls und des Metallanteils in dem Schlamm abzielen. So ist das Abpressen, das Zentrifugieren und/oder die Brikettierung zur Trennung der einzelnen Bestandteile von ölhaltigen Metallschleifschlämmen Stand der Technik. Schlämme mit den Eigenschaften, wie sie oben beschrieben wurden, verhalten sich in derartigen Anlagen jedoch wie hochviskose, homogene Flüssigkeiten, weshalb es mit Hilfe von Pressen oder Zentrifugen nicht möglich ist, das Öl von den Partikeln abzutrennen und Feststoffbriketts oder einen entölten Feststoff zu erzeugen.

Bekannt ist weiterhin die Extraktion von ölhaltigen Schleifschlämmen mit überkritischem CO₂, wie sie beispielsweise in "Entölen von Metallshlämmen", Th. Berger, F. Ihlenburg, Wasser, Luft und Boden, Heft 11, 12, 1998, dargestellt ist. Die Investitionskosten für das Extraktionsverfahren sind extrem hoch, weshalb die CO₂-Extraktion für Schlämme mit Eigenschaften wie oben beschrieben nicht wirtschaftlich ist.

Weiterhin ist die Vakuumdestillation des Öls aus Schlämmen bekannt. Hierbei ist jedoch nachteilig, daß das Öl aufgrund der erforderlichen hohen Temperaturen in seinen Eigenschaften stark verändert wird und weiterhin auch ein hoher apparativer Aufwand erforderlich ist.

Zuletzt ist noch bekannt, daß das Öl aus ölhaltigen Schlämmen mittels Kohlenwasserstoffen wie beispielsweise Hexan, Heptan, Petrolether, Benzin oder anderen Kohlenwasserstoffgemischen extrahiert werden kann, wobei nachfolgend eine Destillation des Lösemittel-Öl-Gemisches durchgeführt wird. Das Hauptproblem bei diesem Verfahren ist die nur unvollkommene Trennung zwischen dem zurückgewonnenen Öl und dem verwendeten Lösungsmittel aufgrund der hohen erforderlichen Affinität zwischen den als Lösungsmittel eingesetzten Kohlenwasserstoffen und dem extrahierten Läppöl. Dadurch ist der Flammpunkt des extrahierten, mit dem Lösungsmittel versetzten Läppöls nach der Aufbereitung so niedrig, daß das Öl für eine erneute Applikation im Läppprozeß nicht eingesetzt werden kann.

Für die oben beschriebenen stabilen dispergierten Schlämme steht bislang kein geeignetes Aufbereitungs- und Verwertungsverfahren zur Verfügung.

Aufgabe der vorliegenden Erfindung ist es daher, ein Verfahren zur Trennung und Behandlung von Schlämmen, in denen die Feststoffpartikel in einer stabilen Dispersion vorliegen, wie Läppschlämmen, Honschlämmen oder dergleichen zur Verfügung zu stellen, das eine Trennung der flüssigen und festen Phase dieser Schlämme ermöglicht. Diese Aufgabe wird durch das Verfahren nach dem Oberbegriff des Anspruchs 1 in Verbindung mit seinen kennzeichnenden Merkmalen gelöst. Vorteilhafte Weiterbildungen des erfindungsgemäßen Verfahrens werden in den abhängigen Ansprüchen gegeben.

Das erfindungsgemäße Verfahren zeichnet sich dadurch aus, daß Schlämme, welche aufgrund der stabilen Dispersion der Festkörperpartikel, die im Falle des Läppschlammes aus Siliziumcarbid, Bornitrid, Korund und/oder Diamant bestehen können, in der flüssigen Phase nicht direkt aufbereitet werden können durch Zugabe amphiphiler Hilfsstoffe in einen für die Fraktionierung geeigneten Zustand überführt werden. Durch die Zugabe der amphiphilen Hilfsstoffe wird die stabile Dispersion destabilisiert, so daß die Feststoffpartikel und Teil der Additive zu einem kompakten Sediment sedimentieren können. Dabei bildet sich ein klarer Überstand, welcher mit herkömmlichen Verfahren, wie z.B. Zentrifugieren, Pressen oder Brikettieren vom Sediment abgetrennt und aufbereitet werden kann. Im Ergebnis wird der Schlamm in eine Feststofffraktion und eine Flüssigkeitsfraktion getrennt. Die Fraktionierung und die nachfolgende Aufbereitung der einzelnen Fraktionen, beispielsweise durch Filtration oder Destillation der flüssigen Phase bildet die Grundlage für die weitere Verwertung in herkömmlicher Weise der hochwertigen Schlamminhaltsstoffe wie beispielsweise der Feststoffpartikel oder der Füssigkeit.

Der erzielte Zustand des Schlammes nach Zugabe der amphiphilen Hilfsstoffe, wie beispielsweise kurzkettiger Ketone und/oder kurzkettiger Alkohole, insbesondere Aceton oder Mischungen aus den genannten Stoffen, zeichnet sich dadurch aus, daß sich der Schlamm lediglich unter Einwirkung des normalen Erdschwerefeldes bereits in ein kompaktes Sediment und einen klaren Überstand trennt. Diese Fraktionierung erfolgt bei Verwendung von Aceton als amphiphiler Hilfsstoff oft schon innerhalb 15 Minuten bzw. 1 Stunde.

Bezüglich der Hilfsstoffe, die eine Trennung der festen Phase und der flüssigen Phase ermöglichen, hat sich herausgestellt, daß rein hydrophile Hilfsstoffe nicht geeignet sind, eine scharfe Trennung in kompaktes Sediment und klaren Überstand herbeizuführen. Erwartungsgemäß sollten aufgrund des hohen Ölgehaltes der Schlämme Hilfsstoffe erfolgversprechend sein, die gut in Öl löslich sind und zur Unterstützung der Sedimentation eine geringe Viskosität aufweisen. Bei Zugabe niedrigviskoser und rein lipophiler Flüssigkeiten (z.B. kurzkettige Kohlenwasserstoffe, Ether) trennt sich jedoch nur wenig Sediment von einem trüben Überstand. Erst durch die erfindungsgemäße Zugabe amphiphiler Hilfsstoffe in den Schlamm, vorzugsweise durch die Zugabe kurzkettiger Ketone und/oder kurzkettiger Alkohole, insbesondere durch die Zugabe von Aceton oder Mischungen aus den genannten Stoffen, gelang es überraschenderweise, die Dispersion derart zu destabilisieren, daß eine einfache Trennung eines kompakten Sedimentes von einem klaren und ölhaltigen Überstand lediglich durch das Erdschwerefeld erreicht wird.

Das kompakte Sediment besteht dabei im wesentlichen aus Schleifmittelpartikeln, Feststoffpartikeln und einem Teil der Additive und Hilfsstoffe, während der klare Überstand im wesentlichen aus Öl und Hilfsstoffen und einem Teil der Additive besteht.

Die Aufbereitung der beiden Fraktionen kann anschließend mit herkömmlich bekannten Aufbereitungsverfahren, wie z.B. Zentrifugieren, Sedimentieren, Pressen oder Extraktion erfolgen.

Das erfindungsgemäße Verfahren kann insbesondere zur Fraktionierung von Schlämmen verwendet werden, in denen die Feststoffpartikel stabil mittels eines Emulgators in Öl dispergiert sind, wie beispielsweise Läppschlämme oder Honschlämme. Diese können auch überwiegend das Schleifmittel, beispielsweise SiC-Partikel, enthalten. Durch den Zusatz von Emulgatoren oder anderen Additiven wird die Viskosität der Flüssigkeit so sehr erhöht, daß die herkömmlichen Trennverfahren diese stabile Dispersion nicht zu fraktionieren vermögen.

Im folgenden werden einige Beispiele für die Durchführung des erfindungsgemäßen Verfahrens gegeben.

### Beispiel 1 (Hilfsstoff Aceton)

Einem Läppschlamm aus der Bearbeitung von Kegelradpaarungen im Automobilbau, der zu etwa 45 % aus Siliziumkarbid, zu etwa 41 % aus Mineralöl, zu etwa 10 % aus Emulgatoren und weiteren Additiven sowie zu etwa 4 % aus Metallabrieb besteht, wurde im Massenverhältnis (Schlamm zu Hilfsstoff) von 1 zu 3 Aceton in ein Reaktionsgefäß gegeben und dieses verschlossen. Das Aceton wurde anschließend durch kräftiges Schütteln über einen Zeitraum von 5 min mit dem Schlamm vermischt. Anschließend wurde das Reaktionsgefäß abgestellt und die Sedimentationsgeschwindigkeit des sedimentierenden Feststoffes gemessen. Es ergab sich das in folgender Tabelle angegebene Volumen des Sediments (bezogen auf das Gesamtvolumen):

| **Zeit** | **Vol-Anteil Feststoffhaltige Phase [%]** | **Überstand [%]** | **Eigenschaft Überstand** |
|---|---|---|---|
| 0 Sekunden | 100 | 0 | - |
| 1 Minute | 27 | 73 | gelblich, trüb |
| 2 Minuten | 22 | 78 | gelblich, leicht trüb |
| 5 Minuten | 20 | 80 | gelblich, klar |
| 30 Minuten | 17 | 83 | gelblich, klar |
| 24 Stunden | 13 | 87 | gelblich, klar |

### Beispiel 2 (Hilfsstoff Ethanol)

Dem gleichen Läppschlamm aus der Bearbeitung von Kegelradpaarungen im Automobilbau, der zu etwa 45 % aus Siliziumkarbid, zu etwa 41 % aus Mineralöl, zu etwa 10 % aus Emulgatoren und weiteren Additiven sowie zu etwa 4 % aus Metallabrieb besteht, wurde im Massenverhältnis (Schlamm zu Hilfsstoff) von 1 zu 3 Ethanol in ein Reaktionsgefäß gegeben und dieses verschlossen. Das Ethanol wurde anschließend durch kräftiges Schütteln über einen Zeitraum von 5 min mit dem Schlamm vermischt. Anschließend wurde das Reaktionsgefäß abgestellt und die Sedimentationsgeschwindigkeit des sedimentierenden Feststoffes gemessen. Es ergab sich das in folgender Tabelle angegebene Volumen des Sedimentes (bezogen auf das Gesamtvolumen):

| **Zeit** | **Vol-Anteil Feststoffhaltige Phase [%]** | **Überstand [%]** | **Eigenschaft Überstand** |
|---|---|---|---|
| 0 Sekunden | 100 | 0 | - |
| 1 Minute | 34 | 73 | grünlich, trüb |
| 2 Minuten | 27 | 78 | grünlich, klar |
| 5 Minuten | 25 | 80 | grünlich, klar |
| 30 Minuten | 22 | 83 | grünlich, klar |
| 24 Stunden | 18 | 82 | grünlich, klar |

### Beispiel 3 (Verwertung der Fraktionen)

In einen weiteren Versuch wurde der oben beschriebene Läppschlamm wieder mit Aceton im Verhältnis 1 zu 3 behandelt und die flüssige Phase wurde nach einer Sedimentationsdauer von 1 Stunde ohne Filtration abdekantiert. Nachfolgend erfolgte die destillative Abtrennung des Acetons aus der flüssigen Phase. Als Destillationsapparat kam ein konventioneller Rotationsverdampf er bei einem Druck von 50 mbar zu Einsatz. Hierbei wurde als Destillat das Aceton zurückgewonnen und aus dem Sumpf konnte ein gelbes, klares Öl abgezogen werden. Der Flammpunkt dieses Öls lag bei 170 °C, die Viskosität des Öls lag bei 17 mPas (40 °C, newtonsche Eigenschaften). Damit entsprechen die physikalischen Eigenschaften des Öls denen eines handelsüblichen Schleiföls. Eine Abnahme der Ölfraktion im Falle der technischen Umsetzung ist von einer Mineralölgesellschaft garantiert.

Die aus der beschriebenen Behandlung resultierende Feststofffraktion wurde getrocknet, wodurch das Aceton entfernt wurde. Die Zusammensetzung der Feststofffraktion wurde durch das Labor einer Eisengießerei analysiert und ist in folgender Tabelle wiedergegeben:

| **Parameter** | **Sollwert für SiC- Qualität "metallurgisch" [%]** | **Feststofffraktion trocken [%]** |
|---|---|---|
| SIC | 88 - 93 | 90,4 |
| C gesamt | 29,4 - 31,9 | 32,3 |
| C ungebunden | 3 - 4 | 5,2 |
| Al₂O₃ | - | 0,8 |
| CaO | - | 0,09 |
| S | - | 0,14 |

Damit entspricht die erhaltene Feststofffraktion nach Angaben der Eisengießerei ihren Anforderungen für "SiC-metallurgisch". Auch diese Fraktion würde im Falle einer technischen Realisierung von der Eisengießerei verwertet werden. Die vollständige Verwertung des bisherigen Sonderabfalls "Läppschlamm" ist somit aufgrund des neuen Verfahrens möglich.

## Patentansprüche

1. Verfahren zur Behandlung von Schlämmen, in denen die Feststoffpartikel in einer stabilen Dispersion vorliegen, wie Läppschlämmen, Honschlämmen oder dergleichen wobei die Feststoffpartikel als feste Phase von der flüssigen Phase getrennt werden,
**dadurch gekennzeichnet, daß**
vor der Trennung dem Schlamm amphiphile Hilfsstoffe zugesetzt werden.

2. Verfahren nach dem vorhergehenden Anspruch, dadurch gekennzeichnet, daß der Schlamm durch Zusatz amphiphiler Hilfsstoffe in einen Zustand überführt wird, in dem der Schlamm unter der Einwirkung des Erdschwerefeldes in ein kompaktes Sediment und einen klaren Überstand trennbar ist.

3. Verfahren nach dem vorhergehenden Anspruch, dadurch gekennzeichnet, daß die Einwirkung des Erdschwerefeldes für 1 Stunde durchgeführt wird.

4. Verfahren nach Anspruch 1 bis 3, dadurch gekennzeichnet, daß die Einwirkung des Erdschwerefeldes für 15 Minuten durchgeführt wird.

5. Verfahren nach einem der vorhergehenden Ansprüche, dadurch gekennzeichnet, daß dem Schlamm als amphiphile Hilfsstoffe kurzkettige Ketone und/oder kurzkettige Alkohole zugesetzt werden.

6. Verfahren nach einem der vorhergehenden Ansprüche, dadurch gekennzeichnet, daß dem Schlamm als amphiphiler Hilfsstoff Aceton zugesetzt wird.

7. Verfahren nach einem der vorhergehenden Ansprüche, dadurch gekennzeichnet, daß die Trennung durch Sedimentation mit nachfolgender Abtrennung der Flüssigkeit oberhalb des Sediments, durch Zentrifugation mit nach folgender Abtrennung der Flüssigkeit oberhalb des abzentrifugierten Feststoffs, durch Pressen mit getrennter Erfassung von fester und flüssiger Phase und/oder durch Brikettierung mit getrennter Erfassung von fester und flüssiger Phase erfolgt.

8. Verfahren nach einem der vorhergehenden Ansprüche, dadurch gekennzeichnet, daß die flüssige Phase anschließend filtriert wird.

9. Verfahren nach einem der vorhergehenden Ansprüche, dadurch gekennzeichnet, daß der bei der Filtration anfallende Feststoff der festen Phase zugeführt wird.

10. Verfahren nach einem der vorhergehenden Ansprüche, dadurch gekennzeichnet, daß anschließend an die Trennung der Hilfsstoff aus der flüssigen Phase, beispielsweise durch Destillation, und/oder aus der festen Phase, beispielsweise durch Trocknung, entfernt wird.

11. Verfahren nach dem vorhergehenden Anspruch, dadurch gekennzeichnet, daß der entfernte Hilfsstoff wiederverwendet wird.

12. Verfahren nach einem der beiden vorhergehenden Ansprüche, dadurch gekennzeichnet, daß der entfernte Hilfsstoff, beispielsweise durch Destillation gereinigt wird.
